## Europäisches Patentamt
## European Patent Office
## Office européen des brevets

(19)

(11) Numéro de publication: **0 076 209**
**B1**

(12)

# FASCICULE DE BREVET EUROPEEN

(45) Date de publication du fascicule du brevet:
02.01.85

(51) Int. Cl.³: **G 06 F 15/20**

(21) Numéro de dépôt: **82401733.9**

(22) Date de dépôt: **24.09.82**

(54) **Dispositif automatique d'analyse statistique d'un objet.**

(30) Priorité: **25.09.81 FR 8118077**

(43) Date de publication de la demande:
**06.04.83 Bulletin 83/14**

(45) Mention de la délivrance du brevet:
**02.01.85 Bulletin 85/1**

(84) Etats contractants désignés:
**AT BE CH DE FR GB IT LI LU NL SE**

(56) Documents cités:
**US - A - 4 034 343**

**PROCEEDINGS OF THE FOURTH INTERNATIONAL JOINT CONFERENCE ON PATTERN RECOGNITION, 7-10 novembre 1978, pages 1119-1124, Kyoto (JP); LEDLEY et al.: "TEXAC- A texture analysis computer' and its biomedical applications"**
**IEEE TRANSACTIONS ON PATTERN ANALYSIS AND MACHINE INTELIGENCE, vol. PAMI-1, no. 1, janvier 1979, pages 50-59, New York (USA); KLINGER et RHODES: "Organization and access of image data by areas"**
**PROCEEDINGS OF THE FOURTH INTERNATIONAL JOINT CONFERENCE ON PATTERN RECOGNITION, 7-10 novembre 1978, pages 565-569, Kyoto (JP); CHEN et PAVLIDIS: "Segmentation by texture using a co-ocurrence matrix and a split-and-merge algorithm"**

(73) Titulaire: **SOCIETE D'OPTIQUE, PRECISION ELECTRONIQUE ET MECANIQUE - SOPELEM, 102 rue Chaptal, F-92300 Levallois-Perret (FR)**

(72) Inventeur: **Pouyet, Patrice, 202 rue du Château des Rentiers Bât. B3, F-75013 Paris (FR)**

(74) Mandataire: **Dupuy, Louis et al, CREUSOT-LOIRE 15 rue Pasquier, F-75383 Paris Cedex 8 (FR)**

BUNDESDRUCKEREI BERLIN

## Description

La présente invention concerne un dispositif automatique d'analyse statistique d'un objet. Elle s'applique en particulier à l'analyse d'objets étudiés au microscope ou de photographies, par exemple dans les domaines de la médecine, de la minéralogie ou de la métallurgie. Dans ces domaines, pour analyser un objet, en particulier sa texture, on peut souvent se contenter d'une analyse statistique; c'est à dire que l'on étudie l'une après l'autre plusieurs images différentes de cet objet et que l'on fait ensuite des moyennes sur les résultats obtenus pour chaque image.

Les appareils d'analyse d'images connus étudient les images une à une et fournissent des résultats sur tous les éléments identifiés dans les images étudiées. Les algorithmes mathématiques utilisés, algorithmes de convolutions ou de morphologie mathématique, travaillent sur toute l'image conservée en mémoire vive et la transforme en une autre image conservée en mémoire vive. Or, la taille de mémoire électronique nécessaire pour conserver de telles images est grande. Ces appareils nécessitent donc une grande quantité de mémoire électronique pour conserver toutes les images nécessaires à l'analyse de l'objet d'autant plus que cette conservation est nécessaire non seulement avant le traitement de chaque image mais aussi pendant le traitement de celle-ci. En outre, les algorithmes utilisés dans ces appareils sont complexes: le temps nécessaire au traitement de chaque image est par conséquent assez long. On peut citer par exemple les deux documents suivants: »IEE Transactions on pattern analysis and machine intelligence, vol PAMI-1, n° 1, Janvier 1979, pages 50—59«; »Proc. Fourth International Joint Conference on Pattern Recognition, 7—10 Novembre 1978, pages 565—569«, qui utilisent des algorithmes consistant à diviser un carré successivement en carrés égaux de plus en plus petits. Les dispositifs décrits dans ces documents utilisent des divisions en carrés de plus en plus petits, mais des images intermédiaires sont reconstituées à chaque division, car l'on veut connaître la localisation des points noirs, blancs ou gris. Ces dispositifs utilisent en outre plusieurs nuances de gris.

Pour tenter de pallier ces inconvénients, en particulier pour tenter de réduire la quantité de mémoire vive nécessaire à la conservation de plusieurs images, on a déjà envisagé la liaison de ces mémoires avec une mémoire de masse. Mais les opérations avec les mémoires de masse sont très lentes par rapport aux opérations en mémoire vive. Par conséquent, si on parvient à réduire la quantité de mémoire électronique on est par contre obligé d'augmenter le temps nécessaire pour analyser l'objet.

L'invention remédie à ces inconvénients. Elle vise un dispositif d'analyse permettant de traiter plusieurs images consécutivement sans nécessiter une quantité importante de mémoire vive ni un temps de traitement important.

Ce dispositif comporte:

—  des moyens optiques de projection sur un récepteur photoélectrique de l'image d'une partie élémentaire de l'objet, avec des moyens de déplacement relatif entre l'objet et ledit récepteur, en continu, à vitesse constante, de façon à ce que les images de parties élémentaires différentes de l'objet soient projetées en continu sur ledit récepteur photoélectrique,
—  des moyens électroniques de codage en continu de chacune desdites images, chaque point élémentaire de l'image étant codé sur un bit 0 ou 1 (noir ou blanc).

Ces moyens sont connus par exemple par le brevet américain 4034343, mais selon l'invention, ce dispositif comporte en outre:

—  un calculateur unique de stockage en continu desdites images, un nombre d'images égal au nombre de points élémentaires de chaque image constituant une image d'ensemble appelée carré, et de traitement successif de chaque carré consistant à diviser le carré en carrés égaux de plus en plus petits dont le nombre augmente, à chaque division, en progression géométrique de raison 4, jusqu'à obtention d'un nombre de carrés égal au nombre de points du carré initial, et, à chaque division à calculer le pourcentage de carrés comportant au moins un point égal à 1 par rapport au nombre total de carrés, ces pourcentages constituant les paramètres de caractérisation du carré,
—  des moyens électroniques de mise en mémoire en continu de ces paramètres puis de calcul statistique au moyen de l'ensemble des paramètres mis en mémoire pour une caractérisation moyenne de l'objet étudié.

Selon un mode préféré de réalisation de l'invention, pour les premières divisions, en carrés de grandes tailles, le carré initial est divisé non seulement en carrés adjacents mais aussi en carrés se recouvrant partiellement de façon à obtenir, pour chaque taille de carrés considérée, le plus grand nombre possible de carrés pouvant être inclus dans le carré initial.

Le dispositif est avantageusement doté de moyens de visualisation des images stockées en mémoire avant leur traitement par le calculateur.

Selon une caractéristique particulière de l'invention, le traitement de chaque carré est inférieur au temps d'acquisition de la totalité des parties élémentaires du carré suivant.

De préférence, le récepteur photoélectrique est constitué par une barette de photodiodes et le déplacement relatif entre ladite barette et l'objet s'effectue perpendiculairement à l'axe de la barrette. Ainsi l'image de la partie élémentaire projetée sur la barrette en continu est constituée d'une colonne formée d'autant de points que la barrette compte de photodiodes.

Afin de mieux être comprise, l'invention va maintenant être décrite avec plus de détails en se référant, à titre d'exemple, à un mode de réalisation préféré représenté par les figures 1 à 5 annexées.

La figure 1 représente une vue d'ensemble du dispositif selon l'invention.

La figure 2 représente un détail agrandi de l'objet analysé dans le dispositif de la figure 1 avec la découpe de l'image en parties élémentaires.

La figure 3 représente un schéma d'ensemble du dispositif de la figure 1 montrant en particulier la disposition des circuits électroniques.

La figure 4 représente des courbes d'interprétation des résultats obtenus par le dispositif de la figure 1. Ces courbes permettent de connaître statistiquement l'allure de la structure de l'objet analysé: la courbe Ca correspond à l'échantillon de la figure 5a; la courbe Cb correspond à l'échantillon de la figure 5b; la courbe Cc correspond à l'échantillon de la figure 5c.

Les figures 5a, 5b, 5c représentent, comme nous l'avons annoncé ci-dessus, des échantillons d'objets dont la structure correspond aux courbes représentées sur la figure 4.

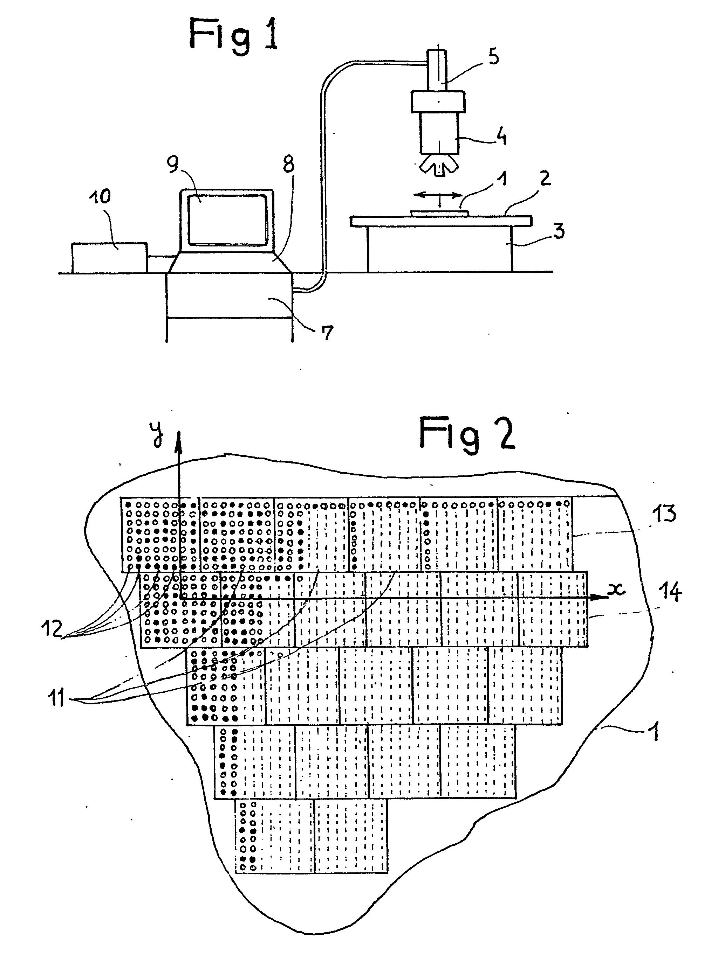

On se reportera tout d'abord à la figure 1.

La figure 1 représente un dispositif d'analyse statistique d'un objet 1 placé sur une platine 2 fixée sur un socle 3. L'objet 1 peut par exemple être constitué par une coupe de tissu si l'on se situe dans le domaine de la médecine.

L'objet 1 défile sous un microscope 4 suivant un mouvement linéaire continu à vitesse constante. Une barrette de photodiodes 5 contenue dans un boitier est fixée au microscope 4. Le microscope 4 projette ainsi sur la barette de photodiodes 5 l'image de la partie de l'objet 1, que l'on appellera »partie élémentaire«, placée sous l'objectif du microscope 4. Le déplacement relatif entre l'objet 1 et le microscope 4 permet de faire défiler devant l'objectif du microscope 4 l'ensemble de l'objet. Ce déplacement s'effectue perpendiculairement à l'axe de la barrette. Sur la figure 1, l'axe de la barrette est perpendiculaire au plan de la figure.

Avant l'analyse, l'objet 1 à observer doit être traité de façon à ce que la substance à analyser plus particulièrement apparaisse avec un fort contraste par rapport au milieu environnant (que ce contraste soit positif ou négatif). Ceci peut se faire par exemple par teinture de l'objet ou en utilisant les possibilités du microscope (contraste de phase, différentiel . . .).

Le signal fourni par les photodiodes, c'est-à-dire l'image d'une partie élémentaire de l'objet, est numérisé par seuillage et échantillonnage dans un circuit électronique 7 avant d'être mis en mémoire dans un calculateur 8. Le calculateur 8 réalise aussi le traitement de l'image de cette partie élémentaire. Ce traitement débute soit immédiatement, soit lorsqu'un nombre déterminé d'images de parties élémentaires, formant une image d'ensemble, ont été mises en mémoire. Le traitement de cette image d'ensemble est toujours inférieur au temps d'acquisition dans la mémoire de la totalité des parties élémentaires de l'image d'ensemble suivante. De même que la mise en mémoire des parties élémentaires s'effectue en continu, le traitement des images d'ensemble s'effectue donc aussi en continu.

Des moyens de visualisation 9 des images stockées en mémoire dans le calculateur avant leur traitement permettent à l'opérateur un contrôle en temps réel de la numérisation de l'image et de la propreté de l'objet étudié. En cas de défaut de l'image, des moyens non représentés sont prévus pour stopper le traitement des données tout en laissant l'image électronique se former. Ainsi, au cas où l'image comporterait une impureté, l'opérateur attend que l'impureté ait disparu de l'image avant de redémarrer le traitement des données. Une chambre claire non représentée permet également de superposer l'image électronique visualisée en 9 sur l'image optique de l'objet vue dans le binoculaire: l'opérateur peut donc contrôler à tout moment l'image électronique en même temps que l'image optique de l'objet.

En série avec le calculateur 8 se trouve un micro-ordinateur 10 dans lequel les paramètres obtenus pour chaque image après le traitement de l'image par le calculateur 8 sont stockés avant d'être utilisés pour des calculs statistiques ultérieurs lorsque tous les paramètres de toutes les images traitées seront stockés. Cet ordinateur 10 comporte des périphériques classiques non représentés sur la figure 1.

On se reportera maintenant à la figure 2. Cette figure montre comment l'objet à étudier 1 est divisé en images successives, ici des carrés 11, et comment chaque carré 11 divisé en parties élémentaires constituées par des colonnes 12 formées d'autant de points que la barrette 5 compte de photodiodes. Chaque point est codé sur un bit (point noir ou blanc). Afin de repérer tous les points étudiés de l'objet 1 on a tracé un repère de coordonnées xOy attaché à l'objet 1. L'axe Oy est parallèle à la direction des photodiodes 5 et l'axe Ox est parallèle à la direction du déplacement relatif entre l'objet 1 et la barrette 5. Si une colonne 12 compte n points et que l'on répète n fois l'observation d'une colonne 12, l'objet 1 avançant par rapport à la barrette 5 de photodiodes avec une vitesse régulière suivant l'axe Ox, on enregistre n colonnes et l'ensemble de ces colonnes forme un carré 11 comptant $n^2$ points. Il faut bien sûr régler la vitesse de déplacement de l'objet 1 par rapport à la barrette 5 de façon à obtenir effectivement des carrés et non des rectangles. Cette vitesse doit également être telle que la surveillance de l'objet à étudier dans l'oculaire du microscope soit possible et que l'acquisition de lumière par les photodiodes se fasse à un rythme conduisant à un bon contraste. Lorsqu'une bande complète telle que la bande 13 a été balayée on doit passer à l'analyse de la bande 14 adjacente. Le passage de la bande 13 à la bande 14 s'effectue soit grâce à une intervention de l'opérateur, en déplaçant l'objet à la main, en déplaçant la platine par exemple à l'aide d'un manche à balai actionnant les moteurs de la platine, ou en appuyant sur une touche provoquant un mouvement type »retour-chariot« de la platine, soit par programmation d'un mouvement automatique de la platine.

La mise en mémoire des colonnes 12 dans le calculateur 8 s'effectue en continu, sans tenir compte de la découpe en carrés. Par contre, l'algorithme de traitement ne s'effectue que carré par carré mais bien sûr toujours en continu, aucun espace de temps n'existant entre le traitement de deux carrés adjacents.

Il est bien évident que l'ensemble des carrés représentés à la figure 2 ne se trouve pas simultanément en mémoire dans le calculateur 8. Le calculateur ne stocke qu'un carré à la fois et dès que le traitement de ce carré est commencé il n'est plus nécessaire de garder en mémoire son image; la place est ainsi libre pour le carré suivant.

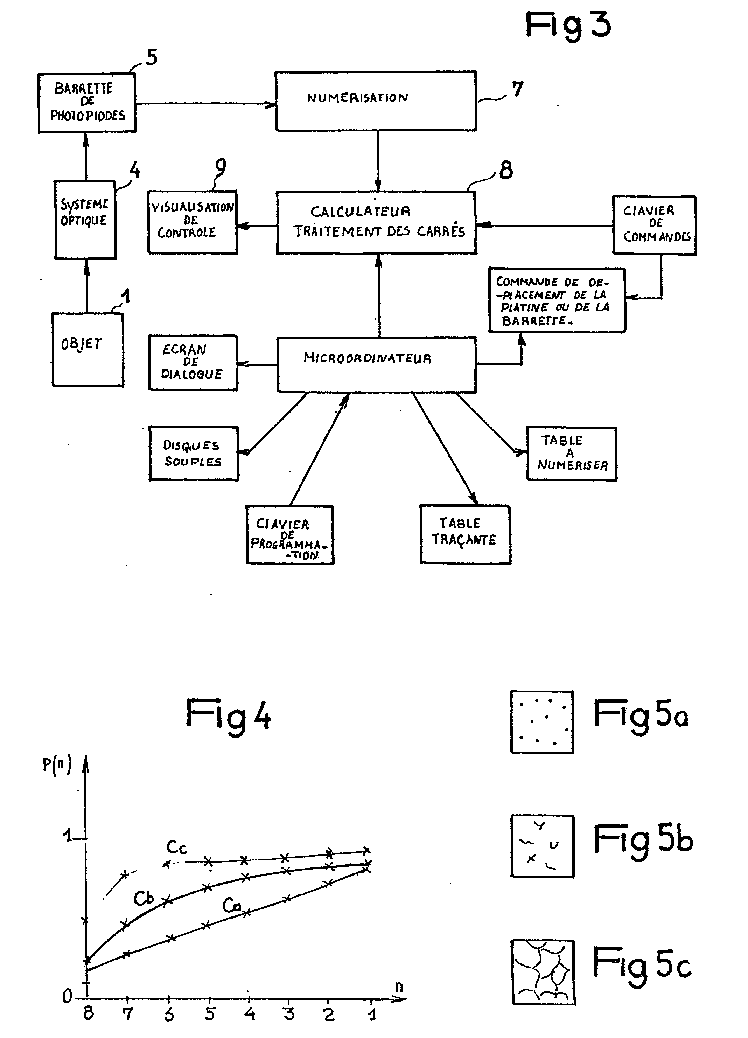

La figure 3 permet de mieux comprendre la disposition des divers éléments du dispositif selon l'invention.

On peut voir sur cette figure que l'image de l'objet 1 est projetée sur la barrette 5 de photodiodes par l'intermédiaire d'un système optique qui est, dans ce mode de réalisation précis 1, un microscope. Le signal fourni par les photodiodes est ensuite numérisé par échantillonnage et seuillage, de manière connue. Cette numérisation se fait en continu, colonne par colonne. Après numérisation, chaque colonne est mise en mémoire dans le calculateur 8 en attendant que le nombre de colonnes soit suffisant pour former un carré. Quand un carré est formé, celui-ci est traité dans le calculateur. Ce traitement fournit une caractérisation de l'image tenant en un nombre déterminé de paramètres. Ces paramètres sont stockés dans le micro-ordinateur 10. Dès le début du traitement de chaque carré, l'image de ce carré n'est plus conservée dans le calculateur; la place est libre pour l'ensemble des colonnes formant le carré suivant.

La figure 3 montre l'écran de visualisation de contrôle 9 ainsi que les périphériques du micro-ordinateur. Celui-ci peut en effet être pourvu, sans que cela soit obligatoire, d'un écran de dialogue, d'une table traçante et de disques souples ainsi que d'une table à numériser. Il comporte également un clavier de programmation des calculs statistiques à effectuer quand tous les paramètres sont stockés dans les micro-ordinateurs.

La figure 3 montre également un clavier de commande permettant de commander le déplacement de la platine ou de la barrette. On voit que ce déplacement peut être aussi commandé par le micro-ordinateur 10 lui-même. Le clavier de commande permet aussi d'agir sur la calculateur 8 pour démarrer ou arrêter le traitement des carrés.

Le traitement des carrés est le suivant: il consiste à diviser chaque carré successivement en carrés égaux de plus en plus petits, dont le nombre augmente à chaque division en progression géométrique de raison 4. Ainsi, on divise tout d'abord le carré en quatre petits carrés égaux chacun au quart du carré initial, puis on divise chacun des quatre carrés obtenus encore en quatre carrés plus petits; on obtient ainsi seize petits carrés égaux chacun au seizième du carré initial. On continue cette division jusqu'à obtention d'un nombre de carrés égal au nombre de points du carré initial. Il est évident que le côté du carré doit comporter un nombre de points multiple de 4.

A titre d'exemple, si l'on choisit des colonnes formées de 256 points, on fera huit divisions successives. Le nombre de points des carrés obtenus après une première division sera égal à $128^2$. Après une deuxième division le nombre de points d'un carré sera égal à $64^2$. A la huitième division le nombre de points d'un carré sera égal à 1.

A chaque division, on compte le nombre de petits carrés contenant au moins un point égal à 1 par rapport au nombre total de carrés. On appellera »carré plein« un carré contenant au moins un point égal à 1. Le pourcentage de carrés pleins par rapport au nombre total de carrés, à chaque division, constitue un des paramètres que l'on stocke ensuite dans le micro-ordinateur. Dans l'exemple donné on obtient huit paramètres. Ces paramètres permettent de connaître statistiquement la structure de l'objet étudié. En effet, la figure 4 montre que suivant l'allure de la courbe obtenue en portant en abscisse le numéro n de la division effectuée, ce numéro allant de à 8, et en ordonnée le pourcentage p(n) de carrés pleins par rapport au nombre total de carrés à chaque division, on peut facilement connaître l'allure générale de la structure de l'objet considéré. On a représenté sur la figure 4 trois courbes différentes, les courbes Ca, Cb, Cc. La courbe Ca correspond à la texture de l'objet représenté à la figure 5a, la courbe Cb correspond à la texture de l'objet de la figure 5b, et la courbe Cc à la texture de l'objet de la figure 5c. On obtient toujours bien sûr une courbe montante qui tend vers 1, puisque les quatre premiers carrés obtenus après la première division sont dans la plupart des cas toujours des carrés pleins. p(8) indique le pourcentage de points élémentaires à 1 par rapport au nombre total de points du carré. p(8) donne donc une indication sur la surface totale des pleins, c'est-à-dire des points à 1. p(7) donne une indications sur le périmètre des ensembles de pleins. Par exemple sur la figure 5c, qui comporte des ensembles fermés de points égaux à 1, le pourcentage p(7) est élevé.

En médecine, on pourra ainsi analyser un tissu, les pleins correspondant aux fibres du tissu, afin de classer celui-ci ou de détecter une anomalie dans ce tissu.

Les huit paramètres obtenus permettent ultérieurement de faire un grand nombre de calculs qu'il n'est pas nécessaire de développer ici.

Le dispositif selon l'invention présente de nombreux avantages. Il permet de traiter un grande nombre d'images consécutivement, sans nécessiter une quantité importante de mémoire vive ni un temps de traitement important. En effet, l'image d'un carré n'est stockée que quelques instants dans le calculateur et le traitement de l'image ne nécessite pas de stocker en mémoire des images intermédiaires. Ce traitement est en outre très rapide; il ne dure que quelques secondes. Un autre avantage du dispositif selon l'invention réside dans le fait que l'observation de l'objet se fait de manière continue et non champ par champ, même si le traitement des données se fait champ par champ. Ceci entraîne un gain de temps et améliore la précision de l'observation car l'opérateur n'a pas, pour chaque champ, à cadrer la partie de l'objet à observer et à effectuer la mise au point. En outre l'opérateur n'a pas à être qualifié puisque l'utilisation du dispositif demande très peu d'interventions manuelles.

L'analyse des résultats obtenus par le dispositif selon l'invention est très précise. En effet, il est difficile, à l'œil nu, d'apprécier des répartitions statistiques alors que l'appareil selon l'invention permet au contraire d'obtenir une telle analyse de façon très précise et très rapidement. En médecine, par exemple, on pourra suivre avec beaucoup de précision l'évolution d'une maladie en étudiant, grâce au dispositif selon l'invention, des coupes du tissu malade.

En outre, le dispositif selon l'invention, en fournissant des résultats sous forme de paramètres, donne des possibilités supplémentaires par rapport à une simple analyse visuelle. Il permet d'effectuer des classements, des tracés de courbe, etc.

Un autre avantage du dispositif selon l'invention réside dans le fait qu'il est peu coûteux puisqu'il comporte relativement peu de matériel, la quantité de mémoire utilisée étant réduite.

Bien entendu l'invention n'est pas strictement limitée au seul mode de réalisation qui a été décrit à titre d'exemple, mais elle couvre également d'autres modes qui n'en différeraient que par des variantes ou par l'utilisation de moyens équivalents.

Ainsi, au lieu de projeter sur la barrette de photodiodes l'image d'un objet observé au microscope, on peut projeter une photographie au moyen d'un dispositif optique. L'invention permet donc d'analyser des photographies.

Le traitement des images ne se fait pas oligatoirement au moyen d'une découpe en carrés. On pourrait concevoir d'autres découpes ou même tout simplement traiter chaque colonne au fur et à mesure de son arrivée dans la mémoire du calculateur.

Dans le cas d'une découpe en carrés on peut perfectionner le traitement de ces carrés, en formant, en particulier, pour les grandes tailles de carrés, non seulement des carrés adjacents mais aussi des carrés se recouvrant partiellement de façon à obtenir, pour chaque taille de carrés considérée, le plus grand nombre possible de carrés pouvant être inclus dans le carré initial.

Pour obtenir des résultats encore plus précis, on peut également analyser à la fois le positif et la négatif de l'image. On obtient ainsi deux fois plus de paramètres que dans le mode de réalisation donné à titre d'exemple.

## Revendications

1. Dispositif automatique d'analyse statistique d'un objet, comportant:

— des moyens optiques (4) de projection sur un récepteur photoélectrique (5) de l'image d'une partie élémentaire (12) de l'objet (1), constituée elle-même d'un nombre déterminé de points élémentaires, avec des moyens de déplacement relatif entre ledit objet (1) et ledit récepteur (5), en continu, à vitesse constante, de façon à ce que les images de parties élémentaires (12) différentes de l'objet (1) soient projetées en continu sur ledit récepteur photoélectrique (5),
— des moyens électroniques (7) de codage en continu de chacune desdites images (12), chaque point élémentaire de l'image (12) étant sur un bit 0 ou 1 (noir ou blanc),

caractérisé par le fait qu'il comporte en outre:

— un calculateur unique (8) de stockage en continu desdites images (12), un nombre d'images (12) égal au nombre de points élémentaires de chaque image (12) constituant une image d'ensemble (11) appelée carré, et de traitement successif de chaque carré (11) consistant à diviser le carré (11) en carrés égaux de plus en plus petits dont le nombre augmente, à chaque division, en progression géométrique de raison 4, jusqu'à obtention d'un nombre de carrés égal au nombre de points du carré (11) initial, et, à chaque division, à calculer le pourcentage de carrés comportant au moins un point égal à 1 par rapport au nombre total de carrés, ces pourcentages constituant les paramètres de caractérisation du carré (11),
— des moyens électroniques (10) de mise en mémoire en continu de ces paramètres puis de calculs statistiques au moyen de l'ensemble des paramètres mis en mémoire pour une caractérisation moyenne de l'objet (1) étudié.

2. Dispositif automatique d'analyse statistique d'un objet selon la revendication 1, caractérisé par le fait que, pour les premières divisions, en carrés de grandes tailles, le carré initial (11) est divisé non seulement en carrés adjacents mais aussi en carrés se recouvrant partiellement de façon à obtenir, pour chaque taille de carrés considérée, le plus grand nombre possible de carrés pouvant être inclus dans le carré initial (11).

3. Dispositif automatique d'analyse statistique d'un objet selon l'une des revendications 1 ou 2, caractérisé par le fait qu'il comporte des moyens (9) de visualisation des images (11) stockées en mémoire avant leur traitement par le calculateur (8).

4. Dispositif automatique d'analyse statistique d'un objet selon l'une quelconque des revendications précédentes, caractérisé par le fait que le traitement de chaque carré (11) est inférieur au temps d'acquisition de la totalité des parties élémentaires (12) du carré (11) suivant.

5. Dispositif automatique d'analyse statistique d'un objet selon l'une quelconque des revendications précédentes, caractérisé par le fait que le récepteur photoélectrique (5) est constitué par une barette (5) de photodiodes et que le déplacement relatif entre ladite barrette (5) et l'objet (1) s'effectue perpendiculairement à l'axe de la barrette (5), l'image de la partie élémentaire (12) projetée sur la barette (5) en continu étant constituée d'une (12) formée d'autant de points que la barrette (5) compte de photodiodes.

**Patentansprüche**

1. Automatische Vorrichtung zur statistischen Analyse eines Gegenstandes,

welche optische Einrichtungen (4) zur Projektion eines Bildes eines elementaren Teiles bzw. Abschnittes (12) des Gegenstandes (1) auf einen photoelektrischen Empfänger (5) umfaßt, welcher Teil selbst aus einer bestimmten Anzahl von Elementarpunkten besteht, mit Einrichtungen für eine laufende bzw. kontinuierliche relative Verschiebung mit konstanter Geschwindigkeit zwischen dem Gegenstand (1) und dem Empfänger (5), so daß die Bilder der verschiedenen Elementarteile (12) des Gegenstandes (1) fortlaufend auf den photoelektrischen Empfänger (5) projiziert werden, und

welche elektronische Einrichtungen (7) für die fortlaufende Kodierung jedes der Bilder (12) umfaßt, wobei jeder Elementarpunkt des Bildes (12) als Bit 0 oder 1 (schwarz oder weiß) kodiert wird,

dadurch gekennzeichnet,

daß sie einen einzigen Rechner (8) zur fortlaufenden Speicherung der Bilder (12) umfaßt, daß eine Anzahl von Bildern (12), die gleich der Anzahl der Elementarpunkte jedes Bildes (12) ist, ein Gesamtbild (11), Quadrat genannt, darstellt, daß zur anschließenden Bearbeitung jedes Quadrates (11) das Quadrat (11) in immer kleinere Quadrate aufgeteilt wird, deren Anzahl bei jeder Unterteilung gemäß einer geometrischen Progression mit einem Verhältnis bzw. einem Faktor 4 zunimmt, bis eine Anzahl von Quadraten erreicht wird, die gleich ist der Anzahl der Punkte des Anfangsquadrates (11), daß bei jeder Teilung zur Errechnung des Prozentsatzes der Quadrate, die zumindest einen Punkt enthalten, der 1 entspricht, im Verhältnis zu der Gesamtzahl der Quadrate, die Prozentsätze die charakteristischen Parameter des Quadrates (11) darstellen, und daß sie elektronische Einrichtungen (10) umfaßt zur fortlaufenden Speicherung dieser Prozentsätze und zur folgenden statistischen Berechnung mittels der Gesamtheit der gespeicherten Parameter zwecks einer mittleren bzw. durchschnittlichen Charakterisierung des untersuchten Gegenstandes (1).

2. Automatische Vorrichtung zur statistischen Analyse eines Gegenstandes nach Anspruch 1, dadurch gekennzeichnet, daß das Ausgangsquadrat (11) für die ersten Unterteilungen in Quadrate größerer Abmessungen, nicht nur in benachbarte Quadrate sondern auch in sich teilweise überlappende bzw. überdeckende Quadrate geteilt wird, um für jede betrachtete Quadratgröße die größtmögliche Anzahl von Quadraten zu erhalten, die in dem Ausgangsquadrat (11) enthalten sein können.

3. Automatische Vorrichtung zur statistischen Analyse eines Gegenstandes nach einem der Ansprüche 1 oder 2, dadurch gekennzeichnet, daß sie Einrichtungen (9) zur Sichtbarmachung der Bilder (11) umfaßt, die vor ihrer Bearbeitung durch den Rechner (8) gespeichert wurden.

4. Automatische Vorrichtung zur statistischen Analyse eines Gegenstandes nach einem der vorangehenden Ansprüche, dadurch gekennzeichnet, daß die Bearbeitung jedes Quadrates (11) kürzer ist als die Zeit für die Beschaffung der Gesamtheit der Elementarteile (12) des nachfolgenden Quadrates (11).

5. Automatische Vorrichtung zur statistischen Analyse eines Gegenstandes nach einem der vorangehenden Ansprüche, dadurch gekennzeichnet, daß der photoelektrische Empfänger (5) einen Steg aus Photodioden besitzt und daß die relative Verschiebung zwischen dem Steg (5) und dem Gegenstand (1) normal zur Achse des Steges (5) verläuft, wobei das Bild des Elementarteiles (12), welches auf den Steg (5) fortlaufend projiziert wird, aus einer Säule besteht, welche aus ebensovielen Punkten besteht, wie der Steg (5) Photodioden besitzt.

**Claims**

1. Automatic device for statistical analysis of an object, comprising:

— optical means (4) for projecting on a photoelectric receiver (5) the image of an elementary part (12) of the object (1), the image itself consisting of a determined number of elementary points, with means of continuous, constant-speed, relative movement between the said object (1) and the said receiver (5), so that the images of the various elementary parts (12) of the object (1) shall be projected continuously on the said photoelectric receiver (5),

— electronic means (7) for continuously coding each of the said images (12), each elementary point of the image (12) being coded as a bit which is 0 or 1 (black or white),

characterised in that it additionally comprises:

— a single calculator (8) for continuously storing the said images (12), a number of images (12) equal to the number of elementary points of each image (12) forming a set image (11) called a square, and for successive processing of each square (11) consisting in dividing the square (11) into smaller and smaller equal squares the number of which increases, at each division, by a factor of 4 in geometric progression, until a number of squares which is equal to the number of points in the initial square (11) is obtained, and, at each division, in calculating the percentage of squares containing at least one point equal to 1 relative to the total number of squares, these percentages constituting the parameters for characterising the square (11), and

— electronic means (10) for continuously storing these parameters in a memory followed by statistical calculations by means of the set of parameters stored in memory for an average characterisation of the object (1) under study.

2. Automatic device for statistical analysis of an object according to Claim 1, characterised in that, for the first division, into squares of large sizes, the initial square (11) is divided not only into adjacent squares but also into partially overlapping squares so as to obtain, for each size of squares which is under consideration, the greatest possible number of squares capable of being included in the initial square (11).

3. Automatic device for statistical analysis of an object according to either of Claims 1 or 2, characterised in that it comprises means (9) for visualising images (11) stored in a memory before they are processed by the calculator (8).

4. Automatic device for statistical analysis of an object according to any one of the preceding claims, characterised in that the processing of each square (11) is subordinate to the time for acquiring all of the elementary parts (12) of the following square (11).

5. Automatic device for statistical analysis of an object according to any one of the preceding claims, characterised in that the photoelectric receiver (5) consists of a strip (5) of photodiodes and the relative movement between the said strip (5) and the object (1) takes place at right angles to the axis of the strip (5), the image of the elementary part (12) projected continuously on the strip (5) consisting of a column (12) formed by as many points as the number of photodiodes in the strip (5).

# Fig 1

# Fig 2

# Fig 3

# Fig 4

Fig 5a

Fig 5b

Fig 5c